(19) Europäisches Patentamt / European Patent Office / Office européen des brevets

(11) **EP 2 642 093 B1**

(12) **EUROPEAN PATENT SPECIFICATION**

(45) Date of publication and mention
of the grant of the patent:
**16.03.2016 Bulletin 2016/11**

(21) Application number: **11840978.8**

(22) Date of filing: **16.11.2011**

(51) Int Cl.:
*F01L 1/18* *(2006.01)*       *F01L 1/12* *(2006.01)*
*F01M 9/10* *(2006.01)*

(86) International application number:
**PCT/KR2011/008760**

(87) International publication number:
**WO 2012/067426 (24.05.2012 Gazette 2012/21)**

(54) **ROCKER ARM SHAFT WITH IMPROVED ABRASION RESISTANCE AND ROCKER ARM SHAFT/BUSH ASSEMBLY COMPRISING SAME**

KIPPHEBELSCHAFT MIT VERBESSERTER ABRIEBFESTIGKEIT UND KIPPHEBELSCHAFT/BUCHSENANORDNUNG DAMIT

ARBRE DE CULBUTEUR À RÉSISTANCE À L'ABRASION AMÉLIORÉE ET ENSEMBLE MANCHON/ARBRE DE CULBUTEUR LE COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.11.2010   KR 20100114826**
**15.11.2011   KR 20110118847**

(43) Date of publication of application:
**25.09.2013   Bulletin 2013/39**

(73) Proprietor: **Doosan Infracore Co., Ltd.**
**Dong-gu**
**Incheon 401-020 (KR)**

(72) Inventors:
• **KIM, Sung Gi**
**Seoul 135-782 (KR)**

• **OH, Seok Ju**
**Yongin-si**
**Gyeonggi-do 448-556 (KR)**

(74) Representative: **Isarpatent**
**Patentanwälte Behnisch Barth Charles**
**Hassa Peckmann & Partner mbB**
**Friedrichstrasse 31**
**80801 München (DE)**

(56) References cited:
WO-A1-00/40840        WO-A1-03/091474
DE-A1- 3 024 306      DE-C- 339 649
FR-A1- 2 216 476      JP-A- H08 158 838
JP-A- 2006 322 331    JP-A- 2007 023 817
JP-A- 2007 177 677    US-A- 4 896 635

## Description

The present invention relates to a rocker arm shaft and to a rocker arm shaft/bush assembly.

WO 00/40840 discloses a rocker arm shaft which comprises a plurality of grooves formed on a portion of an outer surface of the rocker arm shaft.

WO 03/091474 discloses a tool having a microstructured functional surface including circular grooves inform of holes having a hole distance of 250 μm.

## [Background Art]

In general, in an engine, while a cam shaft is rotated by rotational force of a crank shaft, and intake and exhaust valves reciprocate up and down at predetermined time intervals by cams formed on the cam shaft, a process is repeatedly performed in which mixed gas of fuel gas and air is injected, compressed, and exploded in a combustion chamber, and power is obtained by explosion pressure.

A unit including a series of elements for operating the intake and exhaust valves such as the cam shaft, the cam, a cam follower (for example, a tappet), a push load, a rocker arm, a valve spring, a valve, and the like is called a valve train.

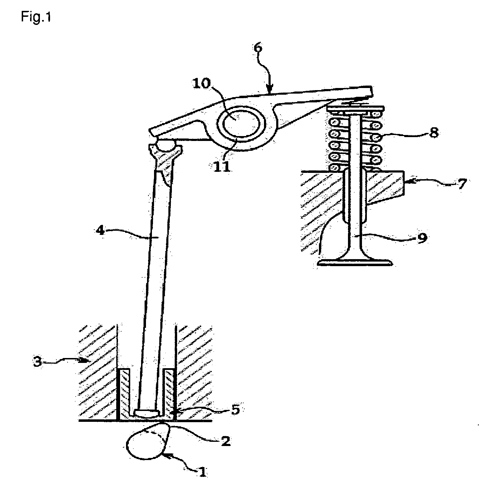

FIG. 1 illustrates a valve train according to the related art, a plurality of cams 2 is formed on a cam shaft 1 along an axial line at predetermined intervals, and a cam follower 5 is provided at a lower end portion of a push load 4 which is provided to be slidable up and down in an engine body block 3. In addition, an upper end portion of the push load 4 is pivotally connected to one side of the rocker arm 6, the other side of the rocker arm 6 is connected to an intake port or an exhaust port of a cylinder head block 7 to be pivotally connected to an upper end portion of a valve 9 which is elastically supported by a valve spring 8.

A rocker arm shaft 10 and a rocker arm bush 11 are provided at the rocker arm 6 in order to move and support the rocker arm 6. The rocker arm 6 may be reciprocated by the rocker arm shaft 10 and the rocker arm bush 11, and here, the rocker arm shaft 10 and the rocker arm bush 11 reciprocate with respect to each other using engine oil.

The rocker arm shaft 10 and the rocker arm bush 11 continuously reciprocate by driving the engine, and thus may not be free from abrasion. Particularly, a time point when a motion velocity of the reciprocation of the rocker arm shaft 10 and the rocker arm bush 11 is zero occurs two times per one period, and when the motion velocity becomes zero, a lubricative film is not formed according to a theory of lubrication. Because an oil film is not formed in the aforementioned stopped-acceleration state, particularly serious friction and abrasion occur on the rocker arm shaft and the rocker arm bush. In a case in which a long time operation is performed under this operational condition, a gap between the rocker arm shaft and the rocker arm bush is increased, and accordingly, a change in valve gap which may affect performance of an internal combustion engine occurs and noise and vibration become serious.

In the related art, researches have been conducted mainly in a direction of improving materials and ingredients of bushes in order to improve abrasion resistance of the rocker arm shaft and the rocker arm bush. However, the method of improving materials and ingredients causes an increase in manufacturing cost, and particularly, as an operational environment of the engine is recently changed to a direction which causes more abrasion of the rocker arm shaft and the rocker arm bush, there is a limitation in reducing abrasion only by improving materials and ingredients.

As such, in order to improve performance of the engine, or the like, it is necessary to reduce abrasion of the rocker arm shaft and the rocker arm bush, and particularly, it is necessary to improve abrasion resistance by reducing abrasion of the rocker arm shaft and the rocker arm bush by using a more economical method in view point of economy than the method of improving materials and ingredients.

## [Disclosure]

## [Technical Problem]

Accordingly, the present inventors have conducted a research regarding friction between two surfaces which are relatively moved using lubricant, and abrasion due to the friction, and a research regarding a method capable of reducing abrasion due to the friction.

The present invention has been made to provide a method of reducing abrasion of a rocker arm shaft and a rocker arm bush by using a comparatively simple method without causing high costs such as a change in materials. In addition, the present invention has been made to provide a rocker arm shaft and an assembly of a rocker arm shaft and a rocker arm bush with improved abrasion resistance, which may be manufactured at a comparatively low manufacturing cost and in a short manufacturing period of time.

The present invention has been made to provide a rocker arm shaft on which concave-convex portions are formed to reduce abrasion of a rocker arm shaft and a rocker arm bush.

In addition, the present invention has been made to provide a rocker arm shaft in which a position and a shape of the concave-convex portion are optimized in order to maximize an effect of improving abrasion.

**[Technical Solution]**

The present invention provides a rocker arm shaft having a surface on which concave-convex portions are formed to improve abrasion resistance, as defined in claim 1.

The rocker arm shaft 10 is to be accommodated in a rocker arm bush 11 and configured to be relatively moved with respect to the rocker arm bush 11 using lubricant so as to allow a rocker arm 6 to reciprocate, the rocker arm shaft 10 including: a plurality of concave-convex portions 21 having groove shapes formed on at least a portion of an outer surface 20 of the rocker arm shaft 10, which is in contact with the rocker arm bush 11.

Meanwhile, the concave-convex portions are formed only on a part of the outer surface 20 of the rocker arm shaft 10. That is, the concave-convex portions 21 may not need to be formed on the entire outer surface 20 of the rocker arm shaft 10, and may be formed only on a portion where the rocker arm shaft 10 and the rocker arm bush 11 frequently come into contact with each other.

According to the present invention, a ratio of a region of the outer surface 20 of the rocker arm shaft 10, where the concave-convex portions 21 are formed, may be 20% to 50% of an area of the entire outer surface 20 of the rocker arm shaft 10.

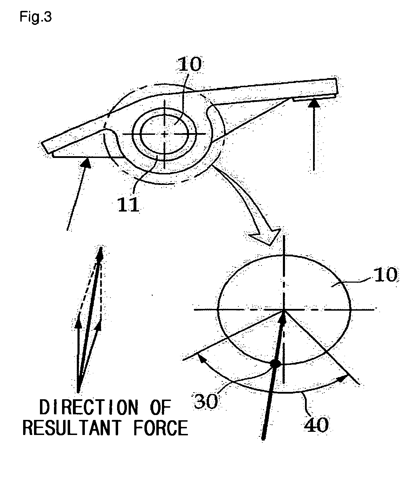

According to the present invention, as illustrated in FIG. 3, the concave-convex portions 21 are formed on both sides based on a corresponding portion 30 of the rocker arm shaft 10, where a maximum line contact load is generated with the rocker arm bush 11 when a valve connected through the rocker arm 6 is opened by 50% (see 40). Here, a portion on which the concave-convex portions are formed is formed on a portion corresponding to an arc of a sector of which a central angle is 72° to 180° based on a center of the portion where the maximum line contact load is generated.

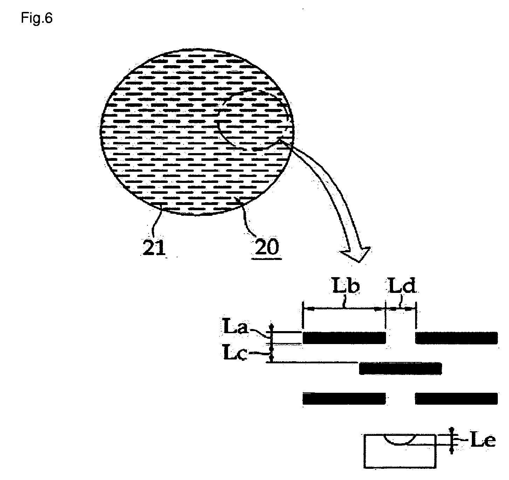

Meanwhile, according to an exemplary embodiment of the present invention, a ratio of a sum of surface areas occupied by the concave-convex portions 21 in a region on which the concave-convex portions 21 are formed may be 5% to 30%, which may be easily understood with reference to FIG. 6 which illustrates the concave-convex portion having the dashed line.

According to an exemplary embodiment of the present invention, as illustrated in FIG. 6, the concave-convex portion 21 may have a dashed line shape, and a long side of the dashed line may be disposed in parallel to an axial direction of the rocker arm shaft 10. In the concave-convex portion having the dashed line shape, a depth of the dashed line may be 10 $\mu$m to 30 $\mu$m, and a length of a long side of the dashed line may be in a range from 100 $\mu$m to 500 $\mu$m. In this case, a ratio of surface areas occupied by portions of the dashed lines to the region on which the dashed lines are formed may be 5% to 30%. The ratio of surface areas occupied by portions of the dashed lines in the region on which the dashed lines are formed may be called density, and it may be understood that the expression "density" herein refers to "compactness of disposition of dashed lines". The density may be calculated by the following Formula 1.

<Formula 1>

$$\text{Density} = (La \times Lb) / \{(La + Lc) \times (Lb + Ld)\}$$

Here, La refers to a length (thickness) of a short side of the dashed line, Lb refers to a length of a long side of the dashed line, Lc refers to an interval between the dashed lines in a thickness direction, and Ld refers to an interval between the dashed lines in a length direction.

In addition, the concave-convex portion 21 according to the present invention may be provided as a circular groove.

The concave-convex portions 21 are formed on both sides based on a corresponding portion of the rocker arm shaft 10, where a maximum line contact load is generated with the rocker arm bush 11 when a valve connected through the rocker arm 6 is opened by 50%, and a portion on which the concave-convex portions 21 are formed is formed on a portion corresponding to an arc of a sector of which a central angle is 72° to 180° based on the portion 30 where the maximum line contact load is generated.

In addition, the concave-convex portion 21 is provided as the circular groove, and an interval of the groove may be 350 $\mu$m to 450 $\mu$m.

In addition, the present invention provides a rocker arm shaft/bush assembly including the described rocker arm shaft 10 and a rocker arm bush 11 in which the rocker arm shaft 10 is accommodated.

In addition, the present invention provides a rocker arm including the rocker arm shaft/bush assembly.

**[Effects]**

According to the present invention, abrasion between the rocker arm shaft and the rocker arm bush may be remarkably reduced by forming the minute concave-convex portions on a surface of the rocker arm shaft. In the present invention, in order to maximize the effect of improving abrasion, a shape, a size, and a position of the minute concave-convex portion are optimized, thereby maximizing the effect of reducing abrasion without consuming excessive manufacturing costs and time.

**[Description of Drawings]**

FIG. 1 is a view illustrating an example of a valve train to which a rocker arm shaft 10 and a rocker arm bush 11 according to the present invention are applied.

FIG. 2 is a view illustrating cross sections of the rocker arm shaft and the rocker arm bush of FIG. 1.

FIG. 3 a view illustrating a portion 30 of the rocker arm shaft 10, where a maximum line contact load is generated with the rocker arm bush 11, when a valve of a cylinder is opened by 50% at a rocker arm 6 to which the rocker arm shaft 10 and the rocker arm bush 11 according to the present invention are applied.

FIG. 4 is a perspective view illustrating the rocker arm shaft 10 according to an example of the present invention.

FIG. 5 is a view illustrating a reduction ratio of an amount of abrasion in a case in which concave-convex portions are formed in comparison with a case in which concave-convex portions are not formed on the rocker arm shaft 10, and illustrates a relationship between a region with the concave-convex portions indicated by an angle and a reduction in amount of abrasion.

FIG. 6 relates to an exemplary embodiment of the present invention in which the concave-convex portions are formed in a dashed line shape, and is an enlarged view of the concave-convex portions having a dashed line shape.

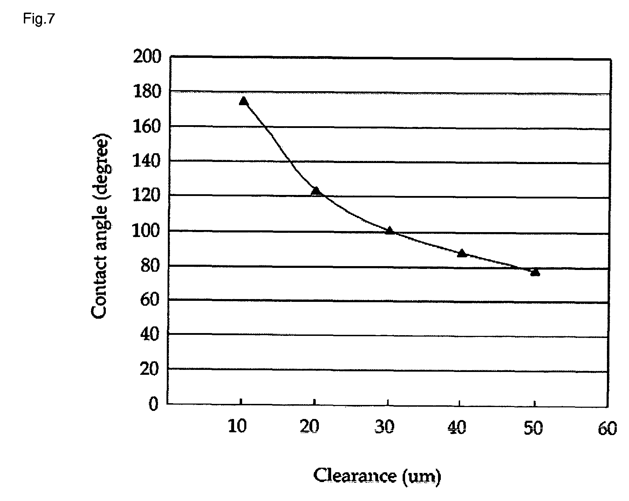

FIG. 7 is an explanatory view regarding a size of a contact region between the rocker arm shaft and the rocker arm bush.

FIG. 8 relates to another exemplary embodiment of the present invention in which the concave-convex portions are formed in a circular groove shape, and is an enlarged view of the concave-convex portion having a circular groove shape.

**[Description of Main Reference Numerals of Drawings]**

2: Cam
5: Cam follower
6: Rocker arm
10: Rocker arm shaft
11: Rocker arm bush
12: Friction region on which a minute hole is not formed
20: Outer surface of rocker arm shaft
21: Concave-convex portion
30: Center of direction of resultant force
41: Concave-convex portion forming region
D: Gap
M: Relative motion of shaft

**[Detailed Description Of Certain Inventive Embodiments]**

Hereinafter, the present invention will be described in more detail with reference to the drawings.

The present invention relates to a technology which reduces friction and abrasion by processing minute concave-convex portions on at least one surface among two surfaces which are relatively moved using lubricant.

It is a well-known fact from the theory of fluid lubrication that if two surfaces are parallel to each other, fluid dynamic pressure is not generated in the lubricant even though the two surfaces are relatively moved using liquid lubricant. There is an exception, but the fluid dynamic pressure is generally generated when there is a wedge effect in which a thickness of an oil film is reduced along a sliding direction. Taking a dynamic pressure thrust bearing and a journal bearing as examples, the thrust bearing generates the wedge effect by an assembly error, and the journal bearing generates the wedge effect by an eccentricity ratio.

However, in general, a mechanical work piece has minute flexure and surface flexure due to surface roughness. Accordingly, a region is present in which a thickness of an oil film is locally reduced along a sliding direction even though two surfaces are relatively moved in parallel to each other, and oil film pressure generated in the region improves lubricity between the two surfaces. However, a region is also present in which a thickness of the oil film is increased along the sliding direction, and pressure in this region is similar to ambient pressure because bubbles are generally generated in this region. Therefore, if a plurality of minute concave-convex portions is processed on at least one surface of two surfaces which are relatively moved, fluid dynamic pressure is generated between the two surfaces even though the two surfaces are relatively moved in parallel to each other, thereby improving lubricity. In addition, the aforementioned surface minute concave-convex portions trap abraded particles or serve as minute oil storages.

Accordingly, in the present invention, a plurality of concave-convex portions 21 having groove shapes is formed on at least a portion of an outer surface 20 of a rocker arm shaft 10 which is accommodated in a rocker arm bush 11 and relatively moved with respect to the rocker arm bush 11 so as to allow a rocker arm 6 to reciprocate.

Meanwhile, in order to more efficiently reduce friction and abrasion, a shape, a size, an arrangement method and the like of the concave-convex portions are also important. A shape, an arrangement and a size of the concave-convex portion, which minimize friction and abrasion, are greatly influenced in accordance with an operating condition such as a contact shape between two surfaces, a load, a sliding velocity, or the like. For example, a shape and an arrangement method of the concave-convex portion, which minimize friction and abrasion, are changed in accordance with whether a shape of a contact portion is a line shape, a spot shape, or a surface shape.

Accordingly, in the present invention, a shape, a size, an arrangement, and the like of the concave-convex portion are optimized to meet operational properties of the rocker arm shaft 10 and the rocker arm bush 11. In addition, in the present invention, the concave-convex portion is formed only on an optimum region because manufacturing costs are increased when the concave-convex portion is formed on unnecessary portions.

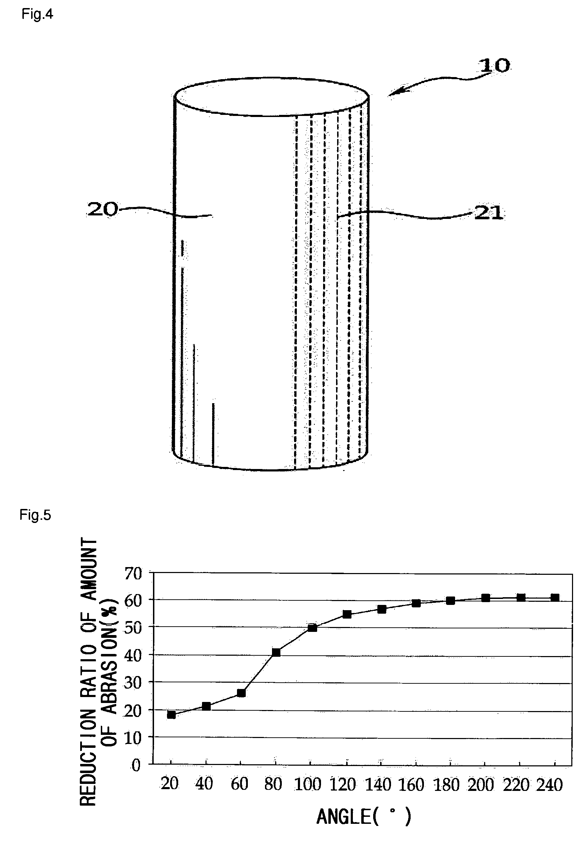

As an example of various exemplary embodiments of the present invention, in FIGS. 4 and 6, the concave-convex portions are formed on a surface of the rocker arm shaft 10 in dashed line shapes parallel in a direction vertical to a friction motion direction of the rocker arm shaft 10. Here, the direction vertical to the friction motion direction of the rocker arm shaft 10 may be an axial direction of the rocker arm shaft 10.

Meanwhile, the concave-convex portions trap abrasive particles which accelerate abrasion between the rocker arm shaft 10 and the rocker arm bush 11, serve to supply lubricant in a situation in which the lubricant is insufficient, and serve to increase oil film pressure between the rocker arm shaft 10 and the rocker arm bush 11, thereby having an advantage of reducing abrasion.

As described above, it is important that the concave-convex portions are formed only on optimum regions because manufacturing costs are increased when the concave-convex portions are formed on unnecessary portions. According to the present invention, a sufficient effect of reducing abrasion may be achieved even when the concave-convex portions 21 are formed only in a region of about 20 to 50% of the entire region of the outer surface 20 of the rocker arm shaft 10. Then, a portion where the concave-convex portions are formed is important.

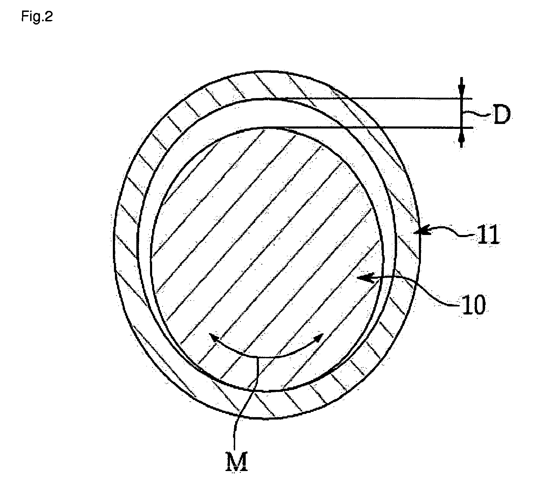

In this regard, the rocker arm shaft 10 and the rocker arm bush 11, which are illustrated in FIG. 1, come into contact with each other only at specific regions according to properties thereof. As illustrated in FIG. 2, a center of the contact region in a circumferential direction becomes a center of a portion where the rocker arm shaft 10 and the rocker arm bush 11 come into contact with each other along a direction of resultant force of forces applied to the rocker arm. Based on the center, the rocker arm shaft 10 and the rocker arm bush 11 are moved in a direction of the arrow indicated by "M" in FIG. 2.

Accordingly, in an example of the present invention, a center 30 in a direction of resultant force of forces applied to the rocker arm is calculated based on when an opening amount of a valve, which is adjusted by the rocker arm, is 50%, and a processing region of the minute concave-convex portions is determined based on the center, thereby maximizing efficiency of processing of minute concave-convex portions (see FIG. 3).

According to an example of the present invention, as illustrated in FIG. 3, the concave-convex portions may be formed on both sides based on the corresponding portion 30 of the rocker arm shaft 10, where a maximum line contact load is generated with the rocker arm bush 11 when the valve connected through the rocker arm 6 is opened by 50%. Here, the portion on which the concave-convex portions are formed is formed on a portion 40 corresponding to an arc of a sector of which a central angle is 72° to 180° based on the center portion 30 where the maximum line contact load is generated.

Specifically, as illustrated in FIG. 2, a gap D is present between the rocker arm shaft 10 and the rocker arm bush 11 because of a difference between an outer diameter of the rocker arm shaft 10 and an inner diameter of the rocker arm bush 11. A size of the contact region between the rocker arm shaft 10 and the rocker arm bush 11 may be changed in accordance with the gap D. Therefore, the concave-convex portion forming region considering the contact region needs to be calculated in consideration of a load applied between the rocker arm shaft 10 and the rocker arm bush 11, and elastic deformation of the rocker arm shaft 10 and the rocker arm bush 11. For example, when the gap D between the rocker arm shaft 10 and the rocker arm bush 11 is 10 μm, the rocker arm shaft 10 and the rocker arm bush 11 come into contact with each other in a region of 180°, and when the gap is 50 μm, the rocker arm shaft 10 and the rocker arm bush 11 come into contact with each other in a region of about 72°.

As such, a processing region of the concave-convex portions is determined by analyzing operational properties and physical phenomena of the rocker arm shaft 10 and the rocker arm bush 11.

FIG 5 illustrates a measurement result of a reduction ratio of an amount of abrasion with respect to an area on which the concave-convex portions are formed in comparison with a case in which the concave-convex portions are not formed on the rocker arm shaft 10. Here, the angle corresponds to a range of the concave-convex portion forming region 40 formed in an arc shape of a sector when seen from a cross section of the rocker arm shaft 10, and a structure of the concave-convex portions follows a size of Example 10 disclosed in the following Table 1. Referring to FIG 5, in a case in which the angle of the arc corresponding to the concave-convex portion forming region 40 is smaller than 72°, because an effect of reducing an amount of abrasion is not great, the angle of the forming region of the concave-convex portions 21 is set to be equal to or greater than 72°. Meanwhile, it may be known that the effect of reducing an amount of abrasion is no longer increased even when the angle is greater than 180°, and therefore it is not necessary to consume additional manufacturing costs and time by unnecessarily forming the concave-convex portions up to the range equal to or greater than 180°.

In an example of the present invention, which is illustrated in FIG. 6, the concave-convex portion 21 has a dashed line shape, and a long side of the dashed line is disposed in parallel to an axial direction of the rocker arm shaft 10. The concave-convex portion having the dashed line shape is easily processed and economical, and has an excellent effect of trapping abrasive particles, supplying lubricant, and increasing oil film pressure.

Here, a depth of the dashed line may be 10 to 30 μm, and a length of a long side of the dashed line may be in a range from 100 to 500 μm. In this case, a ratio of surface areas occupied by portions of the dashed lines in the region on which the dashed lines are formed is 5 to 30%. The ratio of surface areas occupied by portions of the dashed lines in the region on which the dashed lines are formed may be also called density, and it is understood that the expression "density" herein refers to "density of disposition of dashed lines". The density may be calculated by the following Formula 1.

<Formula 1>

$$\text{Density} = (La \times Lb) / \{(La + Lc) \times (Lb + Ld)\}$$

Here, La refers to a length (thickness) of a short side of the dashed line, Lb refers to a length of a long side of the dashed line, Lc refers to an interval between the dashed lines in a thickness direction, and Ld refers to an interval between the dashed lines in a length direction.

A ratio of a sum of surface areas occupied by the concave-convex portions 21 in the region on which the concave-convex portions 21 are formed may be 5 to 30%. This may be easily understood with reference to FIG. 6 which illustrates the concave-convex portion having the dashed line shape. For reference, Le of FIG. 6 refers to a depth of the concave-convex portion. In a case in which the concave-convex portion having the dashed line shape is formed at about the aforementioned depth, there is an excellent effect of trapping abrasive particles, supplying lubricant, and increasing oil film pressure.

In the present invention, in order to confirm the effect of improving abrasion between the rocker arm shaft 10 and the rocker arm bush 11 by the concave-convex portion having the dashed line, an abrasion test was performed with respect to parameters, as presented in the following Table, by setting as design parameters the length La of the short side of the concave-convex portion having the dashed line shape, the length Lb of the long side, the interval Lc between the dashed lines in a thickness direction, and the interval Ld between the dashed lines in a length direction. As a Comparative Example, a case in which no concave-convex portion is formed was used as an example.

Here, the density was calculated according to Formula 1 disclosed above.

[Table 1]

|  | Lb (μm) | Le (μm) | Density (%) | Amount of abrasion (μm) |
|---|---|---|---|---|
| Example 1 | 100 | 10 | 5 | 3.93 |
| Example 2 | 100 | 20 | 13 | 2.86 |
| Example 3 | 100 | 30 | 21 | 5.13 |
| Example 4 | 300 | 10 | 13 | 3.05 |
| Example 5 | 300 | 20 | 21 | 3.33 |

(continued)

|  | Lb ($\mu$m) | Le ($\mu$m) | Density (%) | Amount of abrasion ($\mu$m) |
|---|---|---|---|---|
| Example 6 | 300 | 30 | 5 | 3.52 |
| Example 7 | 500 | 10 | 21 | 3.01 |
| Example 8 | 500 | 20 | 5 | 3.74 |
| Example 9 | 500 | 30 | 13 | 3.43 |
| Example 10 | 300 | 20 | 13 | 2.57 |
| Comparative Example | - | - | - | 7.05 |

The test for Table 1 was designed and performed based on an experimental design method, and an amount of abrasion was represented. Here, a processing range of the minute concave-convex portions was 180°. The measurement of an amount of abrasion (Wear) was performed by measuring abrasion depths, which is typically performed.

In Table 1, Comparative Example is a test result with respect to a case in which the minute concave-convex portion is not processed, and when comparing Example 10 with Comparative Example, an amount of abrasion in Example 10 was reduced by 60% or more compared to Comparative Example. The effect of improving abrasion in other Examples was also excellent. That is, it was confirmed that when an opening amount of the valve is 50%, and the concave-convex portions having the dashed line groove shape, of which the length of the long side is 0.3 mm, the depth is 0.02 mm, and the density is 13%, are processed on the outer circumferential surface of the rocker arm shaft 10 in a region of 180° based on a direction of force of the rocker arm bush applied to the rocker arm shaft, abrasion may be reduced by 60% or more.

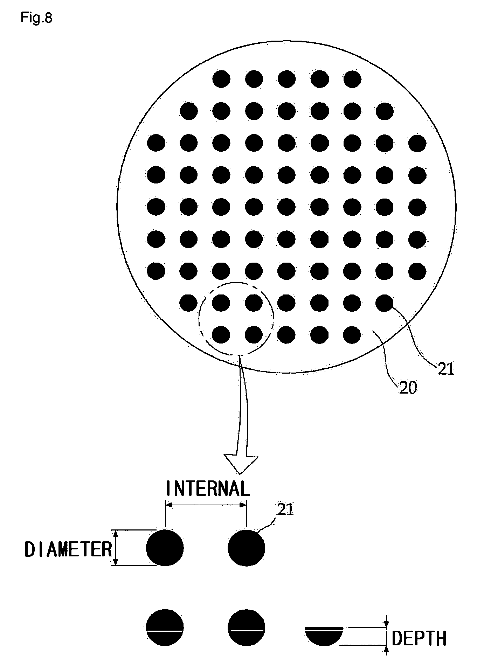

FIG. 8 illustrates circular grooves provided on an outer circumferential surface of a rocker arm shaft 10 according to yet another exemplary embodiment of the present invention. As illustrated in FIG. 8, the minute concave-convex portions according to the present invention are circular minute concave-convex portions having a rectangular arrangement on a sliding surface where friction is generated.

The groove may be provided to have a diameter of 100 $\mu$m to 150 $\mu$m, a depth of 10 $\mu$m to 20 $\mu$m, and an interval of 350 $\mu$m to 450 $\mu$m.

In general, in an internal combustion engine, an operational environment of the rocker arm assembly has a type in which rocker arm bush linearly reciprocates on a sliding surface in a state of being inserted based on a center axis of the rocker arm shaft. Lubricative performance of a lubricative surface formed on the sliding surface, which reciprocates, deteriorates in a region where a direction of motion is changed due to physical properties thereof, and accordingly, generation of abrasion on the lubricative surface is accelerated.

However, the rocker arm shaft including circular grooves according to yet another exemplary embodiment of the present invention greatly improves lubricative performance of a lubricative surface of the rocker arm assembly, which reciprocates, by the circular grooves, thereby remarkably reducing an amount of generation of abrasion.

**[Industrial Applicability]**

The present invention may be applied to the rocker arm shaft which may obtain an effect of reducing abrasion without consuming excessive manufacturing costs and time by forming minute concave-convex portions on a surface of the rocker arm shaft.

**Claims**

1. A rocker arm shaft (10) which is to be accommodated in a rocker arm bush (11) and configured to be relatively moved with respect to the rocker arm bush (11) using lubricant so as to allow a rocker arm (6) to reciprocate, the rocker arm shaft (10) comprising:

   a plurality of concave-convex portions (21) having groove shapes formed on at least a portion of an outer surface (20) of the rocker arm shaft (10), which is to be in contact with the rocker arm bush (11).
   wherein the concave-convex portions (21) are formed on both sides based on a corresponding portion (30) of the rocker arm shaft (10), where a maximum line contact load is generated with the rocker arm bush (11) when a valve connected through the rocker arm (6) is opened by 50%, and a portion on which the concave-convex portions are formed is formed on a portion corresponding to an arc of a sector of which a central angle is 72°

7

to 180° based on the portion (30) where the maximum line contact load is generated; and
wherein the concave-convex portion (21) is provided as a circular groove, and an interval of the groove is 350 $\mu$m to 450 $\mu$m.

2. The rocker arm shaft (10) of claim 1, wherein a ratio of a region of the outer surface (20) of the rocker arm shaft (10), where the concave-convex portions (21) are formed, is 20% to 50% of an area of the outer surface (20) of the entire rocker arm shaft (10).

3. The rocker arm shaft (10) of claim 1, wherein a ratio of a sum of surface areas occupied by the concave-convex portions (21) in a region on which the concave-convex portions (21) are formed is 5% to 30%.

4. The rocker arm shaft (10) of claim 1, wherein the concave-convex portion (21) has a dashed line shape, and a long side of the dashed line is disposed in parallel to an axial direction of the rocker arm shaft (10).

5. The rocker arm shaft (10) of claim 5, wherein a depth Le of the dashed line is 10 $\mu$m to 30 $\mu$m, a length Lb of the long side of the dashed line is 100 $\mu$m to 500 $\mu$m, and a ratio of surface areas occupied by portions of the dashed lines in the region on which the dashed lines are formed is 5% to 30%.

6. A rocker arm shaft/bush assembly comprising:

the rocker arm shaft (10) according to any one claim of claims 1 to 5; and
a rocker arm bush (11) in which the rocker arm shaft (10) is accommodated.

**Patentansprüche**

1. Kipphebelachse (10), die in einer Kipphebelbuchse (11) aufgenommen werden soll und dafür ausgebildet ist ist, unter Verwendung eines Schmiermittels relativ zur Kipphebelbuchse (11) bewegt zu werden, so dass sich ein Kipphebel (6) hin- und herbewegen kann, wobei die Kipphebelachse (10) Folgendes umfasst:

mehrere konkav-konvexe Abschnitte (21), die Nutformen aufweisen, die an mindestens einem Abschnitt einer Außenfläche (20) der Kipphebelachse (10) ausgebildet sind, die in Kontakt mit der Kipphebelbuchse (11) stehen soll, wobei die konkav-konvexen Abschnitte (21) auf beiden Seiten auf der Basis eines entsprechenden Abschnitts (30) der Kipphebelachse (10) ausgebildet sind, wo eine maximale Linienkontaktlast mit der Kipphebelbuchse (11) generiert wird, wenn ein durch den Kipphebel (6) verbundenes Ventil um 50 % geöffnet wird, und ein Abschnitt, auf dem die konkav-konvexen Abschnitte ausgebildet sind, auf einem Abschnitt ausgebildet ist, der einem Kreisbogen eines Sektors entspricht, dessen zentraler Winkel auf der Basis des Abschnitts (30), wo die maximale Linienkontaktlast generiert wird, 72° bis 180° beträgt; und
wobei der konkav-konvexe Abschnitt (21) als eine kreisrunde Nut ausgebildet ist und ein Intervall der Nut 350 $\mu$m bis 450 $\mu$m beträgt.

2. Kipphebelachse (10) nach Anspruch 1, wobei ein Verhältnis einer Region der Außenfläche (20) der Kipphebelachse (10), wo die konkav-konvexen Abschnitte (21) ausgebildet sind, 20 % bis 50 % eines Bereichs der Außenfläche (20) der gesamten Kipphebelachse (10) beträgt.

3. Kipphebelachse (10) nach Anspruch 1, wobei ein Verhältnis einer Summe von Oberflächenbereichen, die durch die konkav-konvexen Abschnitte (21) in einer Region belegt werden, in der die konkav-konvexen Abschnitte (21) ausgebildet sind, 5 % bis 30 % beträgt.

4. Kipphebelachse (10) nach Anspruch 1, wobei der konkav-konvexe Abschnitt (21) eine Strichlinienform hat, und eine lange Seite der Strichlinie parallel zu einer axialen Richtung der Kipphebelachse (10) angeordnet ist.

5. Kipphebelachse (10) nach Anspruch 5, wobei eine Tiefe Le der Strichlinie 10 $\mu$m bis 30 $\mu$m beträgt, eine Länge Lb der langen Seite der Strichlinie 100 $\mu$m bis 500 $\mu$m beträgt und ein Verhältnis von Oberflächenbereichen, die durch Abschnitte der Strichlinien in der Region belegt werden, in der die Strichlinien ausgebildet sind, 5 % bis 30 % beträgt.

6. Kipphebelachsen-/-buchsenbaugruppe, die Folgendes umfasst:

die Kipphebelachse (10) nach einem der Ansprüche 1 bis 5; und
eine Kipphebelbuchse (11), in der die Kipphebelachse (10) aufgenommen ist.

**Revendications**

1. Axe de culbuteur (10) qui doit être logé dans une bague de culbuteur (11) et configuré de manière à être relativement mobile par rapport à la bague de culbuteur (11) en utilisant un lubrifiant de manière à permettre à un culbuteur (6) d'effectuer un mouvement de va-et-vient, l'axe de culbuteur (10), comprenant :

   une pluralité de parties concaves-convexes (21) ayant des formes de rainures formées sur au moins une partie d'une surface extérieure (20) de l'axe de culbuteur (10), qui doit être en contact avec la bague de culbuteur (11), dans lequel les parties concaves-convexes (21) sont formées sur les deux côtés sur la base d'une partie correspondante (30) de l'axe de culbuteur (10), où une charge de contact linéaire maximale est générée avec la bague de culbuteur (11) quand une soupape connectée par l'intermédiaire du culbuteur (6) est ouverte de 50 %, et
   une partie sur laquelle les parties concaves-convexes sont formées est formée sur une partie correspondant à un arc d'un secteur dont un angle central est de 72 ° à 180 ° sur la base de la partie (30) où la charge de contact linéaire maximale est générée ; et
   dans lequel la partie concave-convexe (21) est fournie sous la forme d'une rainure circulaire, et un intervalle de la rainure est de 350 $\mu$m à 450 $\mu$m.

2. Axe de culbuteur (10) selon la revendication 1, dans lequel un rapport d'une région de la surface extérieure (20) de l'axe de culbuteur (10) où sont formées les parties concaves-convexes (21) est 20 % à 50 % d'une zone de la surface extérieure (20) de l'ensemble de l'axe de culbuteur (10).

3. Axe de culbuteur (10) selon la revendication 1, dans lequel un rapport d'une somme des surfaces occupées par des parties concaves-convexes (21) dans une région sur laquelle les parties concaves-convexes (21) sont formées est de 5 % à 30 %.

4. Axe de culbuteur (10) selon la revendication 1, dans lequel la partie concave-convexe (21) a une forme de ligne en pointillés, et un côté long de la ligne en pointillés est disposé parallèlement à une direction axiale de l'axe de culbuteur (10).

5. Axe de culbuteur (10) selon la revendication 5, dans lequel une profondeur Le de la ligne en pointillés est de 10 $\mu$m à 30 $\mu$m, une longueur Lb du côté long de la ligne en pointillés est de 100 $\mu$m à 500 $\mu$m, et un rapport des surfaces occupées par des parties des lignes en pointillés dans la région sur laquelle les lignes en pointillées sont formées est de 5 % à 30 %.

6. Ensemble axe/bague de culbuteur comprenant:

   l'axe de culbuteur (10) selon l'une quelconque des revendications des revendications 1 à 5 ; et
   une bague de culbuteur (11) dans laquelle est logé l'axe de culbuteur (10).

Fig.1

Fig.2

Fig.3

DIRECTION OF
RESULTANT FORCE

Fig.4

Fig.5

Fig.6

Fig.7

Fig.8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0040840 A

- WO 03091474 A